# EUROPÄISCHE PATENTANMELDUNG

(11) **EP 1 221 457 A2**
(43) Veröffentlichungstag der Anmeldung: **10.07.2002**
(21) Anmeldenummer: 01127120.2
(22) Anmeldetag: 15.11.2001
(51) Int. Cl.: C08J 7/12, C08J 7/04, C08L 33/06

(54) **Verfahren zur Modifizierung der Funktionalität von organofunktionellen Substratoberflächen**

(30) Priorität: 05.01.2001 DE 10100384
(71) Anmelder: Degussa AG, 40474 Düsseldorf (DE)
(72) Erfinder: Jenkner, Peter, Dr., 79618 Rheinfelden (DE); Edelmann, Roland, 79664 Wehr (DE); Frings, Albert-Johannes, Dr., 79618 Rheinfelden (DE); Horn, Michael, Dr., 79618 Rheinfelden (DE); Laven, Ralf, Dr., 79618 Rheinfelden (DE); Mack, Helmut, Dr., 79618 Rheinfelden (DE); Monkiewicz, Jaroslaw, Dr., 79618 Rheinfelden (DE); Standke, Burkhard, Dr., 79540 Lörrach (DE)

(57) **Zusammenfassung**

Die vorliegende Erfindung betrifft ein Verfahren zur Modifizierung der Funktionalität von organofunktionellen Substratoberflächen, das dadurch gekennzeichnet ist, dass man
- in einem ersten Schritt die organofunktionellen Gruppe einer Siliciumverbindung A mit der Oberfläche eines Substrats zur Reaktion bringt, wobei die Siliciumverbindung A mindestens eine organofunktionelle Gruppe und als weitere Gruppe mindestens eine Chlor-, Alkoxy-, Carboxy- oder Hydroxy-Gruppe trägt, und
- in einem zweiten Schritt eine organofunktionelle Siliciumverbindung B, wobei die Siliciumverbindungen A und B gleich oder verschieden sind und die Siliciumverbindung B mindestens eine Chlor-, Alkoxy-, Carboxy- oder Hydroxy-Gruppe trägt, auf das vorbehandelte Substrat aufbringt.

Ferner betrifft die Erfindung oberflächenmodifizierte Substrate, die nach dem erfindungsgemäßen Verfahren erhältlich sind, Artikel, die auf einem solchen Substrat basieren, sowie deren Anwendung.

## Beschreibung

Die vorliegende Erfindung betrifft ein Verfahren zur Modifizierung der Funktionalität von organofunktionellen Substratoberflächen. Ferner betrifft die Erfindung oberflächenmodifizierte Substrate, die nach dem vorliegenden Verfahren erhältlich sind, Artikel, die auf einem solchen Substrat basieren, sowie deren Anwendung.

Es ist lange bekannt, dass man die Oberflächeneigenschaften eines Substrats durch Beschichten desselben mit einem speziellen organofunktionellen Silan oder Siloxan verändern kann.

So ist auch bekannt, dass organofunktionelle Silanole oder Silane bzw. Siloxane, die hydrolysierbare Gruppen, wie Halogen-, Alkoxy- oder Carboxyl-Gruppen, tragen, durch Reaktion mindestens einer der besagten hydrolysierbaren Gruppen ― OH-Gruppen sind hier mit eingeschlossen - mit einer anorganischen bzw. OH-Gruppentragenden Substratoberfläche an diese anbinden können.

DE-PS 834002 offenbart ein Verfahren, um kieselartige Gegenstände, wie Glas, Porzellan, Quarz, Glimmer und dergleichen, durch Behandlung mit Wasser abweisenden Stoffen, insbesondere hydrolysierbare Organosilane oder deren Hydrolysierungs- oder polymerisierte Hydrolysierungsprodukte, Wasser abstoßend zu machen.

Ferner sind Mittel bekannt, um Substratoberflächen gleichzeitig mit Öl, Schmutz und Wasser abweisenden Eigenschaften auszustatten (CH-PS 497 599, US 3 012 006). Zur Erzeugung solcher Niedrigenergieoberflächen werden im Allgemeinen fluororganofunktionelle Verbindungen verwendet.

Neben fluororganofunktionellen Systemen sind eine Reihe weiterer hydrolysierbarer bzw. reaktiver Organosilane und Organosiloxane bekannt, mit denen man die Oberflächeneigenschaften von anorganischen Substraten modifizieren kann (u. a. EP 0 002 502 A1, DE-OS 31 00 555, DE-PS 38 36 815, WO 92/21729). So können hydrolysierbare bzw. reaktive Organosilane und Organosiloxane beispielsweise Alkyl-, Alkenyl-, Methacryloxyalkyl-, Mercaptoalkyl-, Glycidyloxyalkyl-, Aminoalkyl-Gruppen als organofunktionelle Gruppe tragen. Demnach ist es nahezu nach Belieben möglich die Oberflächeneigenschaften von Substraten zu modifizieren (vgl. u. a. die deutsche Patentanmeldung 199 08 636.2 sowie DE-OS 198 49 308, DE-OS 198 18 924, DE-OS 198 18 923 und EP 0 832 911 A1, EP 0 716 128 A2, EP 0 716 127 A2, EP 0 518 057 B1).

Häufig ist jedoch die Anbindung einer organosilanbasierenden Beschichtung auf einem organofunktionellen Substrat wenig zufrieden stellend.

Um die Anbindung eines Organosilans an eine Kunststoffoberfläche zu verbessern, wurde vorgeschlagen, auf die Kunststoffoberfläche zunächst eine SiO₂-Schicht aufzubringen und anschließend eine Behandlung mit einem Organosilan, das ferner hydrolysierbare Gruppen trägt, vorzunehmen. Solche Verfahren sind beispielsweise aus DE-OS 22 26 655, EP 0 719 743 B1 oder JP 49031767(Showa) bekannt.

Es ist ebenfalls bekannt, die Oberfläche eines Kunststoffsubstrats in einer sauerstoffhaltigen Plasmaatmosphäre zu behandeln oder mit Dichromatsäure zu oxidieren, um die Oberfläche hydrophil zu machen, und die Oberfläche des so aktivierten Kunststoffsubstrats mit einem Organochlorsilan oder einem Organoalkoxysilan unter Ausbildung eines Wasser und Öl abweisenden Films umzusetzen (EP 0 497 189 B1, EP 0 508 136 B1).

Der vorliegenden Erfindung lag die Aufgabe zugrunde, eine weitere Möglichkeit bereitzustellen, die Eigenschaften von organofunktionellen Substratoberflächen zu modifizieren.

Die gestellte Aufgabe wird erfindungsgemäß entsprechend den Angaben der Patentansprüche gelöst.

Überraschenderweise wurde gefunden, dass man auf einer organofunktionellen Substratoberfläche sowohl eine hervorragende Anbindung einer silanbasierenden Beschichtung als auch eine Änderung der Funktionalität der Substratoberfläche erzielen kann, wenn man
- in einem ersten Schritt die organofunktionelle Gruppe einer Siliciumverbindung A mit der Oberfläche des Substrats zur Reaktion bringt, wobei die Siliciumverbindung A mindestens eine mit dem Substrat vernetzbare organofunktionelle Gruppe und als weitere Gruppe mindestens eine Chlor-, Alkoxy-, Carboxy- oder Hydroxy-Gruppe trägt,
   und
- in einem zweiten Schritt eine organofunktionelle Siliciumverbindung B, wobei die Siliciumverbindungen A und B gleich oder verschieden sind und die Siliciumverbindung B mindestens eine Chlor-, Alkoxy-, Carboxy- oder Hydroxy-Gruppe trägt, auf das vorbehandelte Substrat des ersten Schritts aufbringt.

Gegenstand der vorliegenden Erfindung ist daher ein Verfahren zur Modifizierung der Funktionalität von organofunktionellen Substratoberflächen, das dadurch gekennzeichnet ist, dass man
- in einem ersten Schritt die organofunktionellen Gruppe einer Siliciumverbindung A mit der Oberfläche eines Substrats zur Reaktion bringt, wobei die Siliciumverbindung A mindestens eine organofunktionelle Gruppe und als weitere Gruppe mindestens eine Chlor-, Alkoxy-, Carboxy- oder Hydroxy-Gruppe trägt,
   und
- in einem zweiten Schritt eine organofunktionelle Siliciumverbindung B, wobei die Siliciumverbindungen A und B gleich oder verschieden sind und die Siliciumverbindung B mindestens eine Chlor-, Alkoxy-, Carboxy- oder Hydroxy-Gruppe trägt, auf das vorbehandelte Substrat aufbringt.

Vorzugsweise setzt man beim erfindungsgemäßen Verfahren Siliciumverbindungen A ein, deren organofunktionelle Gruppe chemisch, beispielsweise durch Eliminierung oder Addition, photochemisch, beispielsweise durch UV- oder Radikaliniziierung, oder physikalisch, beispielsweise durch Abscheidung einer dünnen, homogenen, adsorptiv an das Substrat gebundenen Schicht aus der Gasphase, anbindet und gegebenenfalls partiell vernetzt.

Verbindungen A und/oder B können als Monomer (Organosilane), Oligomer bzw. Polymer (Organosiloxane) vorliegen. Dabei können solche Silane oder Siloxane gleiche oder verschiedene organofunktionelle Gruppen, welche in der Lage sind, mit dem Substrat zu reagieren, und darüber hinaus besagte hydrolysierbare Gruppen tragen. So kann die Siliciumverbindung A mit der organofunktionellen Gruppe als Monomer oder als Oligomer an der Kunststoffoberfläche anbinden

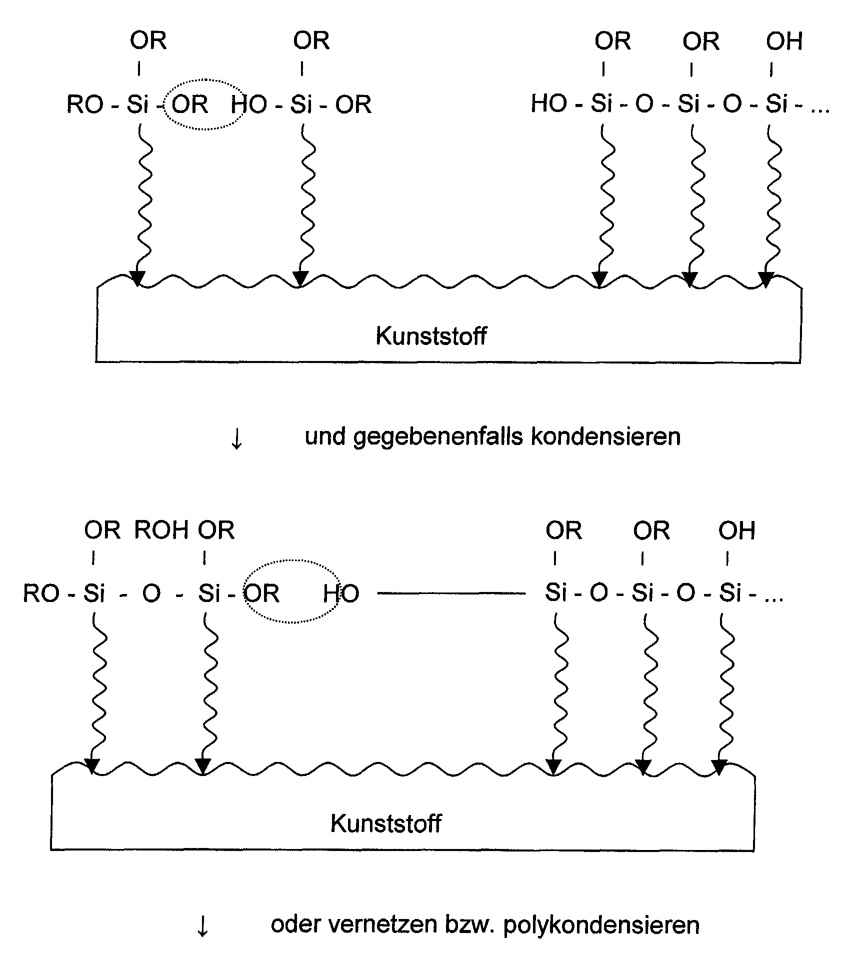

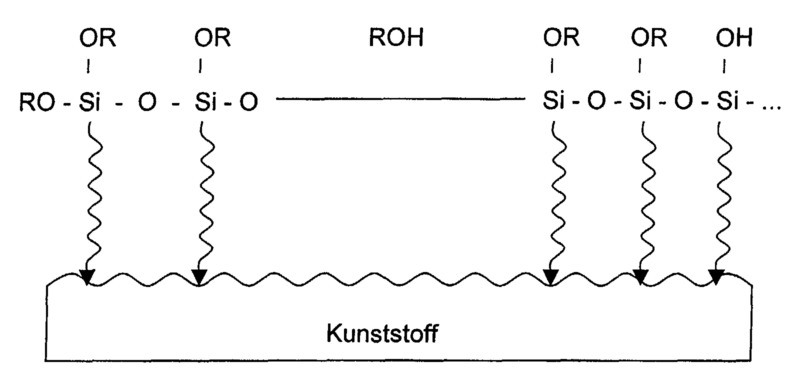

Je nach Funktionalität der eingesetzten Siliciumverbindung A ist auch eine Vernetzung durch Reaktion der organofunktionellen Gruppen möglich:

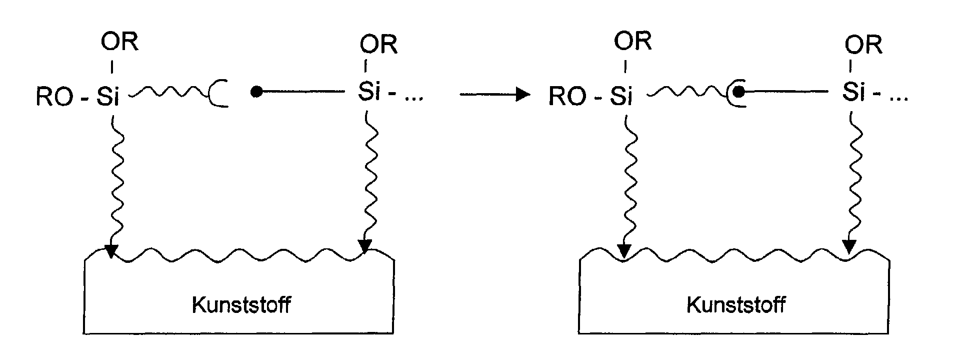

So können beispielsweise eine primäre Amingruppe mit einer Epoxyfunktion oder eine Chlorpropylgruppe mit einer Hydroxyfunktion reagieren.

Geeigneterweise setzt man hierbei eine Siliciumverbindung A ein, welche als organofunktionelle Gruppe eine lineare, verzweigte oder cyclische Alkylgruppe mit 1 bis 20 C-Atomen, die gegebenenfalls halogensubstituiert ist, oder eine ω-Alkenyl-Gruppe mit 2 bis 16 C-Atomen oder Methacryloxyalkyl oder Acryloxyalkyl oder Carboxy- oder Aminoalkyl- oder Glycidyloxyalkyl- oder Epoxyalkyl- oder Ureidoalkyloder Sulfoxyalkyl- oder Azidoalkyl- oder Mercaptoalkyl- oder Hydroxyalkyl- oder Allyloxyalkyl- oder Alkylenoxy-Gruppen trägt.

Insbesondere ist es beim vorliegenden Verfahren vorteilhaft, wenn man im ersten Schritt die Anbindung der organofunktionellen Gruppe an die Substratoberfläche unter pH-Wertkontrolle und/oder in Gegenwart eines Lösemittels und/oder in Gegenwart eines Radikals, beispielsweise einem Peroxid, wie Ditertiärbutylperoxid, Dicumylperoxid oder Dibenzoylperoxid, und/oder unter elektrostatischem und/oder thermischem und/oder photochemischem Einfluss durchführt.

Die Vorreinigung kann durch saure oder alkalische, wässrige bzw. alkoholische Lösungen erfolgen, wobei die Vorreinigung beispielsweise durch Tauchen, Spülen, Besprühen, Bürsten, Polieren, Sandstrahlen, Schleifen, Sputtern ― um nur einige Möglichkeiten zu nennen ― erfolgt.

Auf das gemäß dem ersten Schritt des erfindungsgemäßen Verfahrens vorbehandelte Substrat bringt man nun im zweiten Schritt die Siliciumverbindung B vorzugsweise durch Sprühen, Tauchen, Aufrakeln, CVD-Verfahren (chemical vapor deposition) oder PVD-Verfahren (physical vapor deposition) auf, vgl. Römpp Chemielexikon unter den Stichworten CVD, PVD.

Gegebenenfalls kann nach jedem Schritt eine Neutralisation bzw. eine Hydrolyse, eine thermische Behandlung von 1 Minute bis 5 Stunden bei 60 bis 300 °C und/oder ein Reinigungsschritt erfolgen. Darüber hinaus kann eine weitere thermische Nachbehandlung erfolgen.

Die thermische Behandlung im Anschluss an den ersten Schritt des erfindungsgemäßen Verfahrens führt man geeigneterweise über 0,5 bis 2 Stunden bei 80 bis 120 °C, die nach dem zweiten Schritt über 0,5 bis 2 Stunden bei 100 bis 200 °C durch.

Beim erfindungsgemäßen Verfahren verwendet man als Siliciumverbindung A und/oder B vorzugsweise ein Organosilan der allgemeinen Formel I

R¹ ₓR² _{y}SiZ_{(4-x-y)} (I),

worin die Gruppen R¹ und R² gleich oder verschieden sind und jeweils eine lineare, verzweigte oder cyclische Alkylgruppe mit 1 bis 20 C-Atomen, eine ω-Chloralkyl-, ω-Bromalkyl-, ω-Jodalkyl-, ω-Azidoalkyl-, ω-Cyanoalkyl-, ω-Cyanatoalkyl-, ω-Isocyanatoalkyl-, Fluoralkyl- bzw. Perfluoralkyl-, Alkenyl-, Aryl-, ω-Acryloxyalkyl-, ω-Methacryloxyalkyl-, Sulfan-, ω-Mercaptoalkyl-, Sulfoxyalkyl-, ω-Thiocyanatoalkyl-, ω-Glycidyloxyalkyl-, Epoxyalkyl-, Alkenyloxyalkyl-, Alkoxyalkyl-, ω-Hydroxyalkyl-, Aminoalkyl-, Carbonatoalkyl- oder eine Ureidoalkyl-Gruppe darstellen, wobei die jeweilige Alkylen-Gruppe geeigneterweise 1 bis 6 C-Atome enthält, R² vorzugsweise ein Methyl ist, Z insbesondere ein Chlor, eine Methoxy-, Ethoxy-, i-Propoxy-, 2-Methoxyethoxy- oder Acetoxy-Gruppe darstellt und x gleich 1 oder 2 oder 3 und y gleich 0 oder 1 oder 2 sind, mit der Maßgabe (x+y) ≤ 3.

Insbesondere, aber nicht ausschließlich werden erfindungsgemäß folgende Organosilane bevorzugt: Ethyltrichlorsilan (DYNASYLAN® ATC) Methyltrimethoxysilan (DYNASYLAN® MTMS), Methyltriethoxysilan (DYNASYLAN® MTES), Propyltrimethoxysilan (DYNASYLAN® PTMO), Propyltriethoxysilan (DYNASYLAN® PTEO), i-Butyltrimethoxysilan (DYNASYLAN® IBTMO), i-Butyltriethoxysilan (DYNASYLAN® IBTEO), Octyltrimethoxysilan (DYNASYLAN® OCTMO), Octyltriethoxysilan (DYNASYLAN® OCTEO), Hexadecyltrimethoxysilan (DYNASYLAN® 9116), Hexadecyltriethoxysilan (DYNASYLAN® 9216), 3-Chlorpropyltrialkoxysilane, 3-Brompropylalkoxysilane, 3-Jodpropylalkoxysilane, 3-Chlorpropyltrichlorsilane, 3-Chlorpropylmethyldialkoxysilane, 3-Chlorpropylmethyldichlorsilane, 3-Chlorpropyldimethylalkoxysilane, 3-Chlorpropyldimethylchlorsilane, 3-Aminopropylmethyldialkoxysilane, 3-Aminopropyltrialkoxysilane, u. a. 3-Aminopropyltrimethoxysilan (DYNASYLAN® AMMO), 3-Aminopropyltriethoxysilan (DYNASYLAN® AMEO), N-(n-Butyl)-3-aminopropyltrimethoxysilan (DYNASYLAN® 1189), n-Aminoethyl-3-aminopropylmethyldimethoxysilan (DYNASYLAN® 1411), 3-Aminopropylmethyldiethoxysilan (DYNASYLAN® 1505), N-Aminoethyl-3-aminopropylmethyldialkoxysilane, N-Aminoethyl-3-aminopropyltrimethoxysilan (DYNASYLAN® DAMO), triaminofunktionelles Propyltrimethoxysilan (DYNASYLAN® TRIAMO), u. a. [N-Aminoethyl-N'-(3-trialkoxysilylpropyl)]ethylendiamine sowie [N-Aminoethyl-N-(3-trialkoxysilylpropyl)]ethylendiamine, triaminofunktionelle Propylmethyldialkoxysilane, 3-(4,5-Dihydroimidazolyl)propyltriethoxysilan (DYNASYLAN® IMEO), 3-Methacryloxypropylalkoxysilane, 3-Methacryloxypropyltrimethoxysilan (DYNASYLAN® MEMO), 3-Methacryloxyisobutyltrialkoxysilane, 3-Glycidyloxypropyltrialkoxysilane, 3-Glycidyloxypropyltrimethoxysilan (DYNASYLAN® GLYMO), 3-Glycidyloxypropyltriethoxysilan (DYNASYLAN® GLYEO), 3-Mercaptopropylalkoxysilane, 3-Mercaptopropyltrimethoxysilan (DYNASYLAN® MTMO), Vinyltrichlorsilan (DYNASYLAN® VTC), Vinylmethyldichlorsilan, Vinyldimethylchlorsilan, Vinyltrialkoxysilane, u. a. Vinyltrimethoxysilan (DYNASYLAN® VTMO), Vinyltriethoxysilan (DYNASYLAN® VTEO), Vinyltris(2-methoxyethoxy)silan (DYNASYLAN® VTMOEO), Perfluoralkyltrialkoxysilane, Fluoralkyltrialkoxysilane, u. a. Tridecafluoroctyltrimethoxysilan, Tridecafluoroctyltriethoxysilan (DYNASYLAN® F 8261), Tridecafluoroctylmethyldialkoxysilane, Trimethylchlorsilan, Triethylchlorsilan, (H₅C₂O)₃Si(CH₂)₃-S₄-(CH₂)₃Si(OC₂H₅)₃ 1,4-Bis(3-triethoxysilylpropyl)tetrasulfan (Si-69), (H₅C₂O)₃Si(CH₂)₃-NCS 3-Thiacyamidopropyltriethoxysilan (Si-264), (H₅C₂O)₃Si(CH₂)₃-S₂-(CH₂)₃Si(OC₂H₅)₃ 1,2-Bis(3-triethoxysilylpropyl)disulfan (Si-266), 3-Cyanopropyltrialkoxysilane, u. a. 3-Cyanopropyltrimethoxysilan, N,N',N"-Tris(trimethoxysilylpropyl)triisocyanurat, 3-[Methoxy(polyethylenglycid)]propyltrialkoxysilane, Allyltrialkoxysilane, Allylmethyldialkoxysilan, Allyldimethylalkoxysilan, Allyltrichlorsilan, Allylmethyldichlorsilan, Allyldimethylchlorsilan, 3-Methacryloxy-2-methylpropyltrialkoxysilane, 3-Amino-2-methylpropyltrialkoxysilane, (Cyclohex-3-enyl)-ethyltrialkoxysilane, N-(3-Trialkoxysilylpropyl)alkylcarbonate, 3-Azidopropyltrialkoxysilane, 4-(2-Trialkoxysilylethyl)-1,2-epoxycyclohexane, Bis(3-alkoxysilylpropyl)amine, Tris(3-alkoxysilylpropyl)amine, 3-Acryloxypropyltrialkoxysilane, u. a. 3-Acryloxymethyldialkoxysilane, 3-Acryloxydimethylalkoxysilane, - um nur eine Beispiele zu nennen -, wobei für eine der zu genannten Alkoxygruppen vorteilhaft Methoxy, Ethoxy, 2-Methoxyethoxy, Propoxy oder Acetoxy steht.

Auch ist ein Organosiloxan, das auf mindestens einem Organosilan der allgemeinen Formel I basiert oder insbesondere aus den deutschen Patentanmeldungen 199 55 047.6, 199 61 972.7, EP 0 518 057, EP 0 590 270, EP 0 716 127, EP 0 716 128, EP 0 760 372, EP 0 814 110, EP 0 832 911, EP 0 846 717, EP 0 846 716, EP 0 846 715, EP 0 953 591, EP 0 955 344, EP 0 960 921, EP 0 978 525, EP 0 930 342, EP 0 997 469, EP 1 031 593 und EP 0 075 697 zu entnehmen ist, als Siliciumverbindung A und/oder B beim erfindungsgemäßen Verfahren bevorzugt.

Ferner sind Gemische aus zuvor genannten Organosilanen gemäß Formel I sowie Gemische aus besagten Organosilanen und oben genanntem Organosiloxan geeignet.

D. h., erfindungsgemäß kann man die Siliciumverbindungen A und/oder B sowohl in monomerer als auch in oligomerer bzw. cokondensierter Form, rein oder als Gemisch einsetzen. Ferner sind auch Siliciumverbindungen A und/oder B, die in gelöster, emulgierter oder suspendierter Form vorliegen, für den Einsatz beim vorliegenden Verfahren geeignet. Als Lösemittel für Siliciumverbindungen A und/oder B sind beispielsweise Wasser, Ethanol, Methanol, i-Propanol, Methylethylketon, Aceton, Toluol, Xylol, Dimethylether, Waschbenzin, Tetrahydrofuran, Cyclohexan und gegebenenfalls Gemische daraus, um nur einige Möglichkeiten zu nennen, geeignet.

Insbesondere kann man die Oberflächeneigenschaften folgender organofunktioneller Substrate durch erfindungsgemäßes Beschichten modifizieren: Kunststoffe, insbesondere Polymere, wie Polyethylen (PE), Polypropylen (PP), Polyamide (PA), Polyester, Polyacrylate, Polyurethan (PU), Polystyrol, Polycarbonate, Polyvinylchlorid (PVC), Polyethylenterephthalat (PET), Silicone sowie Melaminharze, Carbonfasern, Furanharze, Alkydharze, Bis-maleinid-triazinharze, synthetische Elastomere, wie SB-Kautschuk oder Nitrilkautschuk, oder Compounds, wie Acrylnitril-Butadien-Styrol-Copolymere (ABS) und Ethyl-Vinylacetat (EVA). Ebenfalls kann man Naturstoffe, wie Holz, Kautschuk, im Sinne der vorliegenden Erfindung als organofunktionelle Substrate einsetzen. So können beispielsweise Gebrauchsgegenstände auf Basis oben genannter Kunststoffe aber auch Textilien sowie Textilfasern behandelt werden.

Im Allgemeinen führt man das erfindungsgemäße Verfahren wie folgt aus:

Im ersten Schritt kann das Substrat zunächst mit einem mono- oder oligomeren organofunktionellen Silan oder Siloxan, welches zumindest eine Chlor-, Alkoxy-, Carboxy- oder Hydroxy-Gruppe besitzt, beschichtet werden, wobei dessen organischer Substituent durch chemische, photochemische oder physikalische Prozesse polymerisierbar ist. In der Regel kann durch die sich dabei einstellende Orientierung des auf diese Weise herstellbaren Silyl-Gruppen tragenden Polymers auf der Substratoberfläche eine im Wesentlichen von der sich einstellenden Kompatibilität, den topographischen und sterischen Gegebenheiten abhängige Anbindung zur Substratoberfläche erzielt werden. Diese Anbindung kann durch die Reaktivität des organischen Substituenten unter Einfluss von pH-Wert, d. h. durch Zugabe einer Säure oder Base oder entsprechender Salze, wie Säureanhydride, HCI, HNO₃, HCOOH, CH₃COOH, H₃PO₄, H₂SO₄ oder Amine, Na₂CO₃, NaOH, NH₄Cl, CH₃COONa, CH₃COONH₄ und/oder elektrostatischen Gegebenheiten, wie Aufladungseffekte an der Substratoberfläche und/oder in Abhängigkeit von Art und Konzentration von reaktiven Gruppen an der Substratoberfläche unter Ausbildung von elementaren Bindungen, elektrostatischen Wechselwirkungen, Säure/Basen-Interaktion oder Wasserstoffbrückenbindung zustande kommen.

Im Allgemeinen orientieren sich dabei die Chlor-, Alkoxy-, Carboxy- oder HydroxyGruppen aufgrund des inhärenten polaren Charakters entgegengesetzt zur Substratoberfläche, sodass man unter Einstellung eines vertikalen Konzentrationsgradienten eine sehr dauerhafte, polare Beschichtung erhalten kann. Gegebenenfalls können im Anschluss an den ersten Schritt eine thermische Nachbehandlung oder ein Reinigungsschritt durchgeführt werden.

Im zweiten Schritt wird darauf, beispielsweise durch CVD- oder PVD-Abscheidung, Sprühen, Tauchen, Spülen, Bürsten, Aufrakeln, Aufpolieren oder Aufrollen, ein organofunktionelles Alkoxy-, Carboxy- oder Hydroxy-Silan aufgebracht. Gegebenenfalls erfolgt das Aufbringen in Gegenwart geringer Wassermengen.

In der Regel erfolgt dabei im Wesentlichen eine flächendeckende Anbindung der Sekundärschicht des zweiten Schritts zur polaren Primärbeschichtung des ersten Schritts unter 3-dimensionaler Vernetzung. Gegebenenfalls können im Anschluss an den zweiten Schritt ein Reinigungsschritt und/oder eine thermische Behandlung durchgeführt werden. Ein Reinigungsschritt kann einen neutralen, sauren oder alkalischen Waschvorgang umfassen. Ferner kann eine thermische Nachbehandlung beispielsweise in Raumluft, Inertgasatmosphäre oder im Vakuum in einer Trocknungsanlage durchgeführt werden.

Somit ist auch Gegenstand der vorliegenden Erfindung ein oberflächenmodifiziertes Substrat, das gemäß dem erfindungsgemäßen Verfahren erhältlich ist.

Ebenso sind Gegenstand der vorliegenden Erfindung Artikel, die auf einem erfindungsgemäßen, oberflächenmodifizierten Substrat basieren, beispielsweise Kunststoffplatten, -rohre, -folien, -fasern, -textilien, Halbzeuge, Bauelemente, Spritzgussteile, Möbel sowie Einrichtungsgegenstände, Fensterrahmen, Türen, Tore, Türrahmen, Behälter, Kfz-Bauteile, elektrische Bauteile, um nur einige Beispiele zu nennen.

Ferner zeichnet sich das erfindungsgemäße Verfahren durch einfache Anwendung und vergleichsweise kurze Behandlungszeiten aus.

Das vorliegende Verfahren ermöglicht in der Regel extrem dauerhafte Modifizierungen zur Optimierung eines weiten Bereichs von Anwendungen, wie "Easy-to-clean" (leicht zu reinigen, Schmutz abweisend), Kratzfestbeschichtungen, Antigraffiti, Abperleffekt, durch Einstellung hydrophiler, hydrophober oder oleophober Oberflächeneigenschaften.

Daher ist ebenfalls Gegenstand der vorliegenden Erfindung die Verwendung erfindungsgemäßer Substrate und erfindungsgemäßer Artikel als leicht zu reinigende Oberflächen (Easy-to-clean), d. h. Staub bzw. Schmutz abweisende Oberflächen einschließlich Farbe abweisender Oberflächen (Antigraffiti), als kratzfest beschichtete Substrate sowie als Öl und Wasser abweisend ausgestattete Oberflächen (Abperleffekt) sowie beispielsweise Mikroorganismen und Bakterien abweisende Oberflächen.

Durch das erfindungsgemäße Verfahren können somit in vorteilhafter Weise fest haftende Beschichtungen mit definierter Funktionalität auf organofunktionellen Substraten erzeugt werden. So zeichnen sich erfindungsgemäß hergestellte Beschichtungen üblicherweise auch durch eine sehr gute mechanische Belastbarkeit aus, beispielsweise bei Beanspruchung durch Bürsten, Scheuern, Betreten etc.

Die vorliegende Erfindung wird durch die nachfolgenden Beispiele näher erläutert.

### Beispiele:

- Lösung 1a:: Gehalt: 0,2 Gew.-% Dibenzoylperoxid, 0,2 Gew.-% Chlorparaffine, 99,2 Gew.-% Ethanol, 0,4 Gew.-% 3-Methacryloxypropyltrimethoxysilan Herstellung: 2,0 g Dibenzoylperoxid (50 Gew.-%ige Suspension, phlegmatisiert in Chlorparaffinen; PEROXIDCHEMIE) werden mit 2,0 g 3-Methacryloxypropyltrimethoxysilan und 496,0 g wasserfreiem Ethanol vermischt)
- Lösung 1b:: Gehalt: 0,5 Gew.-% Dibenzoylperoxid, 0,5 Gew.-% Chlorparaffine, 97,0 Gew.-% Ethanol, 2,0 Gew.-% 3-Methacryloxypropyltrimethoxysilan Herstellung: 5,0 g Dibenzoylperoxid (50 Gew.-%ige Suspension, phlegmatisiert in Chlorparaffinen; PEROXIDCHEMIE) werden mit 10,0 g 3-Methacryloxypropyltrimethoxysilan und 485,0 g wasserfreiem Ethanol vermischt)
- Lösung 2a:: Herstellung: 1,0 Gew.-% Tridecafluor-1,1,2,2-tetrahydrooctyltriethoxysilan (DYNASLYAN® F 8261) wird mit 1,0 Gew.-% dest. Wasser (angesäuert mit CH₃COOH auf pH 2,5) und 98 Gew.-% Ethanol über 5 Stunden gerührt. Danach ist die Lösung einsatzbereit, wobei die Verarbeitungszeit 72 Stunden beträgt.
- Lösung 2b:: Herstellung: 2,2 Gewichtsteile eines oligomeren fluor-/aminofunktionellen Siloxans werden in 97,2 Gewichtsteilen dest. Wasser gelöst und noch für 2 Stunden gerührt. Danach ist die Lösung einsatzbereit, wobei die Verarbeitungszeit 72 Stunden beträgt.

### Beispiel 1

6 handelsübliche Polyacrylglasplatten (RÖHM; PMMA VQ 101s; ca. 15x15 cm) werden mit einem Papierwischtuch (unbehandelt) entstaubt und danach statisch entladen. Es werden die statischen Kontaktwinkel (KRÜSS-Meßapparatur, visuelle 5-fach-Beschichtung) von deionisiertem Wasser sowie von n-Heptan gemessen.

3 Platten werden danach einem 5-stündigen Kochtest in deionisiertem Wasser unterzogen. Nach Trocknen bei Raumtemperatur werden die Messungen wiederholt. Weiters wird an 3 Platten eine mechanische Abriebsprüfung vorgenommen. Dabei werden die Platten in einer Prüfmaschine mit repräsentativen Polyesterbürsten (Wasserfilm, 2 kg Auflagekraft) durch Vor-/Rück-Bewegung in einer Richtung über die angegebene Zyklenzahl belastet.

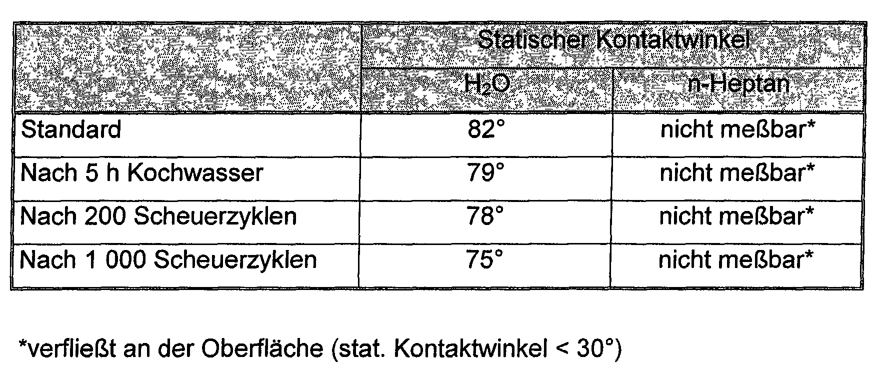

### Beispiel 2

6 Polyacrylglasplatten werden jeweils wie in Beispiel 1 vorgereinigt, mit Lösung 2a durch 5-minütiges Tauchen behandelt und anschließend mit einem Papierwischtuch vorsichtig trocken gewischt.

Nach Trocknen über 30 Minuten bei Raumtemperatur werden die Platten über 1 Stunde bei 80 °C im Labortrockenschrank thermisch nachbehandelt.

Die in Beispiel 1 angeführten Messungen von Kontaktwinkel sowie Abrieb werden wiederholt.

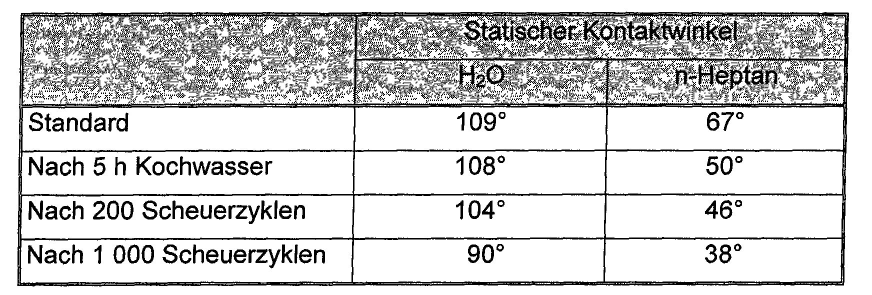

### Beispiel 3

6 Polyacrylglasplatten werden jeweils wie in Beispiel 1 vorgereinigt, mit Lösung 2b durch 5-minütiges Tauchen behandelt und anschließend mit einem Papierwischtuch vorsichtig trocken gewischt.

Nach Trocknen über 30 Minuten bei Raumtemperatur werden die Platten über 1 Stunde bei 80 °C im Labortrockenschrank thermisch nachbehandelt.

Die in Beispiel 1 angeführten Messungen von Kontaktwinkel sowie Abrieb werden wiederholt.

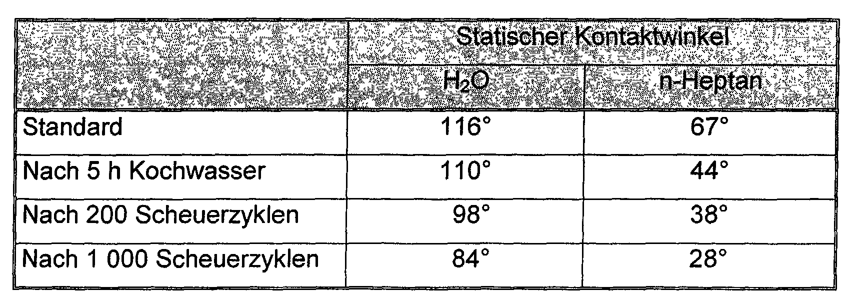

### Beispiel 4

6 Polyacrylglasplatten werden jeweils wie in Beispiel 1 vorgereinigt, mit Lösung 1a durch 5-minütiges Tauchen behandelt und anschließend mit einem Papierwischtuch trocken gewischt. Die zuvor durchsichtig glänzende Substratoberfläche erscheint nach dem Tauchvorgang matt. Danach werden die Platten für 1 Stunde in einer geschlossenen Kammer einer UV-Bestrahlung (254 nm) unterzogen, wobei die ursprünglichen optischen Eigenschaften der Platten wieder hergestellt werden.

Im Gegensatz zu den unbehandelten Probekörpern, deren Oberfläche sich mit dest. Wasser nicht benetzen lässt, sind die behandelten Platten vollständig benetzbar. Diese Eigenschaft bleibt auch nach 2-stündigem Kochen in dest. Wasser erhalten. Dies weist auf das Vorhandensein eines hydrophilen, vernetzten Polysiloxanfilms hin. Die Methoxysilylfunktionen hydrolysieren unter Methanolabspaltung zu Hydroxysilylgruppen bzw. kondensieren weiter zu Polysiloxanen. Die reaktiven Methacrylatfunktionen orientieren sich unter chemischer Anbindung ("grafting") zur Polyacrylatoberfläche hin.

Anschließend werden die Platten für 5 Minuten in Lösung 2a getaucht und danach hochkant zum Abtropfen aufgestellt. Nach Trocknen über 30 Minuten bei Raumtemperatur werden die Platten über 1 Stunde bei 80 °C im Labortrockenschrank thermisch nachbehandelt.

Die in Beispiel 1 angeführten Messungen von Kontaktwinkel sowie Abrieb werden wiederholt.

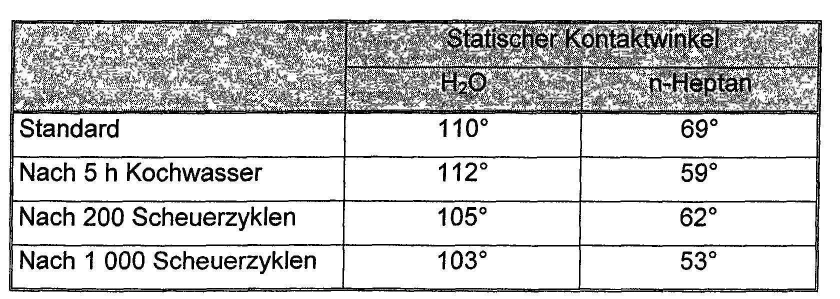

### Beispiel 5

6 Polyacrylglasplatten werden nach Beispiel 4 mit Lösung 1a und Lösung 2b behandelt.

Die in Beispiel 1 angeführten Messungen von Kontaktwinkel sowie Abrieb werden wiederholt.

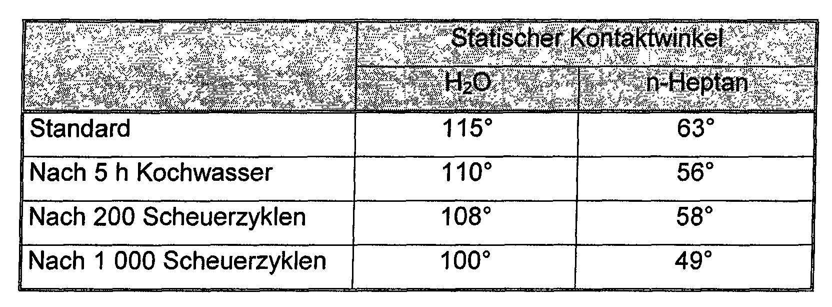

### Beispiel 6

6 Polyacrylglasplatten werden nach Beispiel 4 mit Lösung 1b und Lösung 2a behandelt.

Die in Beispiel 1 angeführten Messungen von Kontaktwinkel sowie Abrieb werden wiederholt.

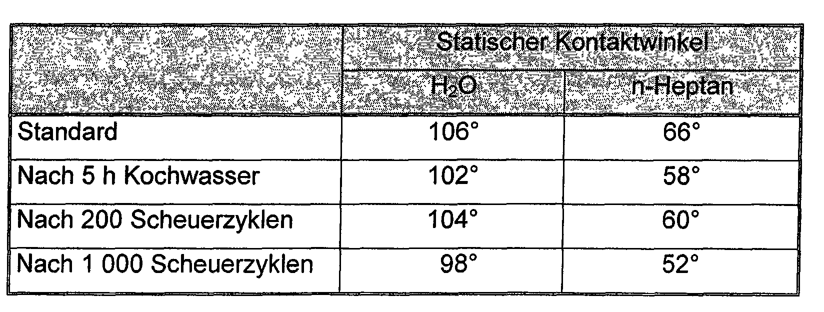

## Patentansprüche

1. Verfahren zur Modifizierung der Funktionalität von organofunktionellen Substratoberflächen,
**dadurch gekennzeichnet,**
**dass** man
- in einem ersten Schritt die organofunktionelle Gruppe einer Siliciumverbindung A mit der Oberfläche eines Substrats zur Reaktion bringt, wobei die Siliciumverbindung A mindestens eine organofunktionelle Gruppe und als weitere Gruppen mindestens eine Chlor-, Alkoxy-, Carboxy- oder Hydroxy-Gruppe trägt,
und
- in einem zweiten Schritt eine organofunktionelle Siliciumverbindung B, wobei die Siliciumverbindungen A und B gleich oder verschieden sind und die Siliciumverbindung B mindestens eine Chlor-, Alkoxy-, Carboxy- oder Hydroxy-Gruppe trägt, auf das vorbehandelte Substrat aufbringt.

2. Verfahren nach Anspruch 1,
**dadurch gekennzeichnet,**
**dass** man eine Siliciumverbindung A einsetzt, deren organofunktionelle Gruppe chemisch, photochemisch oder physikalisch vernetzbar ist.

3. Verfahren nach Anspruch 1 oder 2,
**dadurch gekennzeichnet,**
**dass** man eine Siliciumverbindung A einsetzt, welche als organofunktionelle Gruppe eine lineare, verzweigte oder cyclische Alkylgruppe mit 1 bis 20 C-Atomen, die gegebenenfalls halogensubstituiert ist, oder eine Alkenyl-Gruppe mit 2 bis 16 C-Atomen trägt.

4. Verfahren nach einem der Ansprüche 1 bis 3,
**dadurch gekennzeichnet,**
**dass** man im ersten Schritt die Anbindung der organofunktionellen Gruppe an die Substratoberfläche unter pH-Wertkontrolle und/oder in Gegenwart eines Lösemittels und/oder in Gegenwart eines Radikals und/oder unter elektrostatischem und/oder thermischem und/oder photochemischem Einfluss durchführt.

5. Verfahren nach einem der Ansprüche 1 bis 4,
**dadurch gekennzeichnet,**
**dass** man im zweiten Schritt die Siliciumverbindung B durch Sprühen, Tauchen, Spülen, Bürsten, Aufpolieren, Aufrollen, Aufrakeln, CVD-Verfahren oder PVD-Verfahren aufbringt und gegebenenfalls thermisch nachbehandelt.

6. Verfahren nach einem der Ansprüche 1 bis 5,
**dadurch gekennzeichnet,**
**dass** man als Siliciumverbindung A und/oder B ein Organosilan der allgemeinen Formel I
R¹ ₓR² _{y}SiZ_{(4-x-y)} (I),
worin die Gruppen R¹ und R² gleich oder verschieden sind und jeweils eine lineare, verzweigte oder cyclische Alkylgruppe mit 1 bis 20 C-Atomen, eine ω-Chloralkyl-, ω-Bromalkyl-, ω-Jodalkyl-, ω-Azidoalkyl-, ω-Cyanoalkyl-, ω-Cyanatoalkyl-, ω-Isocyanatoalkyl-, Fluoralkyl- bzw. Perfluoralkyl-, Alkenyl-, Aryl-, ω-Acryloxyalkyl-, ω-Methacryloxyalkyl-, Sulfan-, ω-Mercaptoalkyl-, Sulfoxyalkyl-, ω-Thiocyanatoalkyl-, ω-Glycidyloxyalkyl-, Epoxyalkyl-, Alkenyloxyalkyl-, Alkoxyalkyl-, Hydroxyalkyl-, Aminoalkyl-, Carbonatoalkyl- oder eine Ureidoalkyl-Gruppe darstellen, wobei die jeweilige Alkylen-Gruppe 1 bis 6 C-Atome enthält, R' vorzugsweise ein Methyl ist, Z ein Chlor, eine Methoxy-, Ethoxy-, i-Propoxy-, 2-Methoxyethoxy- oder Acetoxy-Gruppe darstellt und x gleich 1 oder 2 oder 3 und y gleich 0 oder 1 oder 2 sind, mit der Maßgabe (x+y) ≤ 3,
oder ein Organosiloxan, das auf mindestens einem Organosilan der allgemeinen Formel I basiert,
oder ein Gemisch besagter organofunktioneller Siliciumverbindungen einsetzt.

7. Verfahren nach einem der Ansprüche 1 bis 6,
**dadurch gekennzeichnet,**
**dass** man Siliciumverbindungen A und/oder B in monomerer, oligomerer, cokondensierter, gelöster, emulgierter und/oder suspendierter Form einsetzt.

8. Verfahren nach einem der Ansprüche 1 bis 7,
**dadurch gekennzeichnet,**
**dass** man als organofunktionelles Substrat einen Kunststoff oder einen Compound oder einen Naturstoff einsetzt.

9. Verfahren nach einem der Ansprüche 1 bis 8,
**dadurch gekennzeichnet,**
**dass** man als organofunktionelles Substrat Polyethylen, Polypropylen, Polyamid, Polyester, Polyacrylat, Polyurethan, Polystrol, Polycarbonat, Polyvinylchlorid, Polyethylenterephthalat, Silicone, Melaminharz, Carbonfasern, Furanharze, Alkydharze, Bis-maleinid-triazinharze, Ethyl-Vinylacetat, AcrylnitrilButadien-Styrol-Copolymer, Holz oder Kautschuk einsetzt.

10. Oberflächenmodifiziertes Substrat, erhältlich nach einem der Ansprüche 1 bis 9.

11. Artikel, die auf einem oberflächenmodifizierten Substrat nach einem der Ansprüche 1 bis 10 basieren.

12. Verwendung oberflächenmodifizierter Substrate oder Artikel nach einem der Ansprüche 1 bis 11 für Wasser, Öl, Schmutz, Staub oder Farbe abweisende Anwendungen sowie für Kratzfestanwendungen.
